# EUROPEAN PATENT APPLICATION

(11) **EP 0 757 499 A2**
(43) Date of publication of application: **05.02.1997**
(21) Application number: 96305412.7
(22) Date of filing: 23.07.1996
(51) Int. Cl.: H04N 17/00

(54) **Method and apparatus for testing the signature of decoders of compressed digital television signals**

(30) Priority: 02.08.1995 GB 9515824
(71) Applicant: DIGI-MEDIA VISION LIMITED, London E1 9XY (GB)
(72) Inventor: Bock, Alois, Eastleigh, Hampshire (GB)
(74) Representative: Brown, Angela Mary

(57) **Abstract**

A method of testing a digital decoder which decodes a compressed digital television signal including a test bit stream. The decoder is connected to a signal analyser which checks whether the decoder provides an expected signature of bits from the test bit stream. The signal analyser has to be clocked by gating pulses which must be fixed in relation to the test bit stream. In order to supply the gating pulses, the invention includes a trigger signal in the television signal which is detected at the output of the decoder, the gating of the signal analyser being determined by reference to the detected trigger signal.

## Description

This invention relates to digital decoders and more specifically to the testing thereof.

With the introduction of digital compression techniques for the transmission of television signals the level of complexity of receivers increases dramatically as compared to analogue receiver technology. As a result, the number and complexity of required receiver and decoder manufacturing tests could potentially increase correspondingly. This would make the production of such receivers and decoders very expensive.

Signature analysis based on the calculation of cyclic redundancy checksums is widely used in testing the functionality of digital circuitry as well as the integrity of digital transmission and storage media. It is based on the principle that a unique checksum, or signature, can be calculated for a given block of binary words. Any deviation in the block of information, even if it is only a single bit, will lead to a different signature.

When testing digital hardware the block of information is usually defined by two gating pulses, one to initialise the checksum to zero and a second one to define the end of the test period. The problem in testing digital decoders is that no such gating pulses, suitable for the definition of a unique test period, are readily available in the receiver.

The present invention provides a solution to this problem based on test bitstreams which, when decoded, can be used to derive unique trigger points for the calculation of receiver checksums.

The calculation of checksum signatures relies critically on the, availability of clock accurate gating pulses. Since these pulses must have a fixed position in relation to a repeatable test bitstream they cannot be generated by the decoder independently of the received bitstream. One way of making sure that the gating pulses have a fixed position in relation to the decoded bitstream is to derive the pulses from the decoded signal itself.

The limitation of such a method is that a decoder which is not fully functional may not provide any gating pulses at all. Consequently, the proposed method is probably less suitable for fault finding applications. In many situations, however, it is insufficient to prove the full functionality of the decoder without the need for detailed debugging information in case of failures.

According to the present invention, there is provided a method of testing a digital decoder operable to decode a compressed digital signal including a test bit stream, comprising the steps of
inputting a compressed digital signal to a decoder, said compressed digital signal including said test bit stream, wherein said test bit stream comprises a compressed trigger signal,
decoding said compressed digital signal, creating a digital signal comprising a trigger signal,
applying said digital signal to a detector, said detector responding to the presence of said trigger signal by generating a pulse,
applying said digital signal and said pulse to a signal analyser,
analysing a portion of said digital signal, the start of said portion being controlled by said gating pulse, said analysis generating a value indicative of a characteristic of said waveform, and
comparing said value to a value obtained from a correctly operating decoder, to determine whether the decoder has accurately decoded said signal.

An advantage of the present invention lies in the fact that a predetermined section of the decoded digital signal can be analysed easily, so that any errors in the decoded signal can be easily spotted. This contrasts with previous method for testing decoders which did not isolate a predetermined section of the signal, and hence could only verify the existence of a signal.

A specific embodiment of the invention will now be described with reference to the accompanying drawings in which:
Figure 1 shows a block diagram of the basic system; and
Figure 2 shows an example waveform of a trigger pulse suitable for Audio compression systems.

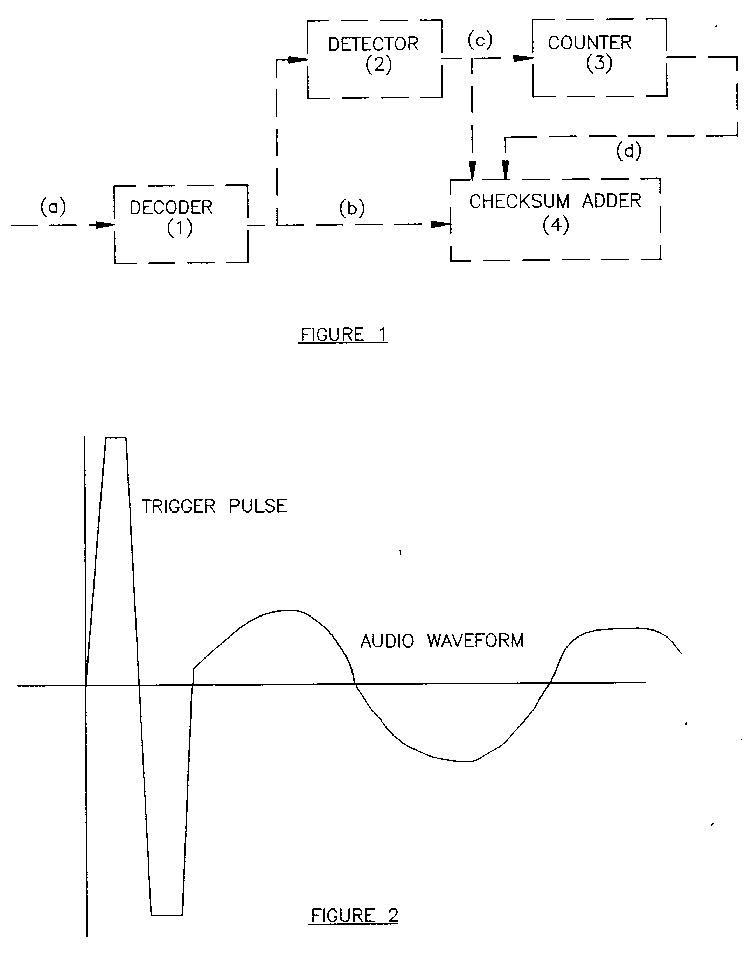

Figure 1 shows a block diagram of the basic system in which a decoder under test 1 is decoding a compressed video or audio bitstream a. The decompressed signal b is fed both to the trigger waveform detector 2 and to the checksum adder 4. The trigger waveform detector 2 generates a start pulse c which is also used to reset a counter 3. This counter provides a fixed duration for the test period between the start pulse c and a stop pulse d. The signature analyser calculates a checksum on the decompressed bitstream b in the period between start and stop pulse only. For any given compressed bitstream a, a fully functional decoder will provide a decompressed waveform b which is uniquely defined by the compressed bitstream a so that a uniquely defined signature checksum will be calculated. Decoders which are not fully functional will either not decode the trigger waveform at all or will produce a bitstream and hence a signature which is inconsistent with that of a working decoder. If no trigger waveform is detected the signature checksum will remain at zero thus indicating a failure. In this set-up the test period as defined by counter 3 can be made arbitrarily long.

It may be argued that the detection of the trigger waveform itself is sufficient to prove the proper operation of the decoder and that the provision of the checksum adder is not really necessary. Due to the complexity of compression decoders, however, it is felt that a thorough test can only be achieved with test bitstreams of considerable length and that the decoding of a short trigger pulse was insufficient proof of the proper operation of the decoder.

Both the position and the waveform of the trigger pulse in the system described above clearly have to be optimised for the compression algorithm of the system. Many algorithms for digital video compression in particular make use of predictive coding in such a way that the waveform of the decoded bitstream is dependent not only on the compressed bitstream at that point but also on some part of the history of the decoding process. If the history of the decoding process is not uniquely defined, signature analysis cannot be used for test purposes. The position of the trigger pulse is, therefore, carefully chosen to coincide with the beginning of a refresh period such that the decoded waveform from that point onwards is not dependent the previously decoded waveform.

The wave form of the trigger pulse is chosen so as to provide a unique reference point in the decompressed signal. In its simplest implementation this can be achieved by defining an amplitude threshold which is only exceeded during the trigger waveform. More complicated systems might define a unique waveform which cannot be emulated during the rest of the test waveform.

Figure 2 shows an example of a simple trigger waveform b suitable for audio compression systems. Both the width of the trigger pulse and its amplitude are chosen such that the pulse suffers only a minimum amount of distortion during the compression/decompression process. The position of the trigger pulse is chosen so that the waveform immediately after the trigger pulse is not dependent in any way on the signal waveform before the trigger pulse.

The same criteria used for the definition of suitable trigger waveforms in audio systems also apply in the case of video compression systems with the obvious distinction that a video trigger pulse is defined in two dimensions. In block coding systems, such as ISO/IEC 13818-2 (MPEG-2), a suitable trigger pulse could consist of a uniform coding block of a particular colour, situated at the beginning of an intra-coded frame.

The system as described above can be extended to test more parts of the transmission system prior to the decoder. As an example it would be, possible to insert a test waveform at the input of the compression encoder. The signature test at the output of the decoder would then test not only the full functionality of the decoding system itself but also all functional blocks of the transmission system as well as the encoder up to the point where the trigger waveform is inserted. Such an extension is possible as long as the transmission chain stays purely in the digital domain and as long as there are no transmission errors.

A method is described which makes it possible to apply the concept of signature analysis to the test of compression receivers and decoders. The method is based on the inclusion of unique trigger points in the compressed bitstream. Fully functional decoders will decode the bitstream in such a way that a uniquely defined trigger waveform can be detected and utilised for the initialisation of a checksum calculation. After a previously defined test period the checksum calculation is terminated and the checksum is compared with that of a known working decoder.

## Claims

1. A method of testing a digital decoder operable to decode a compressed digital signal including a test bit stream, comprising the steps of
inputting a compressed digital signal to a decoder, said compressed digital signal including said test bit stream, wherein said test bit stream comprises a trigger signal,
decoding said compressed digital signal, creating a digital signal comprising a trigger signal,
applying said digital signal to a detector, said detector responding to the presence of said trigger signal by generating a gating pulse,
applying said signal and said gating pulse to a signal analyser,
analysing a portion of said digital signal, the start of said portion being controlled by said pulse, said analysis generating a value indicative of a characteristic of said waveform, and
deciding whether said decoder has accurately decoded said signal by comparing said value to a value obtained from a correctly operating decoder.

2. The method of claim 1, wherein the characteristic of said waveform is dependent on each bit of the waveform and the value generated is a signature word.

3. The method of claims 1 or 2, wherein the portion of the digital signal analysed is of a fixed predetermined duration.

4. The method of claim 3, wherein the duration is derived from a counter triggered by the pulse from the detector.

5. The method of any preceding claim, wherein the value indicative of the characteristic of said waveform is based on a checksum addition.

6. The method of any preceding claim, wherein the digital signal is a television signal and the trigger signal comprises a trigger pulse coinciding with the beginning of a refresh period of said television signal.

7. Apparatus for testing digital decoding means operable to decode a compressed digital signal including a test bit stream, comprising
detection means for detecting a trigger signal in a digital signal output by said digital decoding means, and outputting a pulse upon detection of said trigger signal,
analysis means operable to analyse a portion of said digital signal, the inputs of said analysis means comprising the output of said decoding means and the output of said detection means, the start of said portion being controlled by said pulse,
generating a value indicative of a characteristic of said digital signal, and
decision means arranged to compare the value generated by the analysis means with a value obtained from a correctly operating decoder.

8. Apparatus according to claim 7, wherein the characteristic of said digital waveform is dependent on each bit of the waveform and the value generated is a signature word.

9. Apparatus according to claims 7 or 8, wherein the portion of said digital signal analysed is of a fixed predetermined duration.

10. Apparatus according to claim 9, further comprising counting means triggered by said pulse from said detector, arranged to send a signal to said analysing means after said fixed predetermined duration.

11. Apparatus according to any preceding claim, wherein the value indicative of the characteristic of said waveform is based on a checksum addition.

12. Apparatus according to any of claims 7 to 11 for testing a digital decoding means operable to decode a compressed digital television signal including a trigger pulse coinciding with the beginning of refresh period of said television signal.
